# EUROPEAN PATENT APPLICATION

(11) **EP 0 581 755 A1**
(43) Date of publication of application: **02.02.1994**
(21) Application number: 93870156.2
(22) Date of filing: 27.07.1993
(51) Int. Cl.: B60K 28/02, B60K 28/06, B60R 25/04

(54) **A device for warning the driver of a vehicle**

(30) Priority: 28.07.1992 BE 9200680
(71) Applicant: TRINT ELECTRONICS N.V., B-8500 Kortrijk (BE)
(72) Inventor: Decock, Jan, B-8500 Kortrijk (BE)
(74) Representative: Quintelier, Claude

(57) **Abstract**

A device for warning the driver of a vehicle, said device comprising a control unit connected with a message generator provided with a memory, said control unit comprises a time watching element arranged to generate at intervals in a period between a start and a finish moment a control signal and to supply it to the message generator, which is arranged to read and to supply under control of the control signal a warning message with a cognate character, stored in the memory.

## Description

The invention relates to a device for warning the driver of a vehicle, said device comprising a control unit connected to a message generator provided with a first memory, said first memory being provided for storing at least a first message.

Such a warning device equips already a large number of vehicles. Most of the time the first message relates to a problem concerning the functioning of the vehicle. So, for example, a message is supplied indicating that the oil level of the engine is too low, or that the brake blocks comprise insufficient friction material.

The message self is presented by way of a warning light which starts burning, or by displaying a corresponding message on a LCD display or by means of a speech generator. The different messages are stored in a memory, for example a ROM or EEPROM.

The known warning devices are essentially provided for supplying messages which relates to the technical functioning of the vehicle. Even the messages which in a way could influence the behaviour of the driver, so as for example those supplied by the econometer or the revolution counter, are essentially of a technical origin.

It is an object of the invention to provide a device for warning the driver of a vehicle not to drive the vehicle in an irresponsible manner without whatever technical failure on the vehicle.

A device according to the invention is characterized in that the control unit comprises a time watching element provided with an input for supplying a start and finish moment, which time watching element is further provided for each time generating at intervals in a period situated between said start and finish moment a first control signal and supplying it to the message generator, said message generator being provided for reading and supplying under the control of the first control signal the first message, formed by a warning message with a cognate character, stored in the first memory. Because an irresponsible driving behaviour is most of the time linked to the use of alcohol by going out, which on its turn is again linked to well determined time moments, the time watching element provides the possibility to generate the warning message only on predetermined time moments. This avoids that the message is transmitted at an unsuitable time. Because the start and finish moments are supplied to the device, those time moments can be freely programmed, thus providing the possibility to activate the device only when the vehicle provided with such a device is used as transport means for example to the place where the party takes place or at well determined time moment so as for example in the evening or at night. The cognate character of the warning message is for example formed by having the message spoken by the partner, a parent or a good friend of the driver or by displaying an image of such a person whether or not provided with sound. Such a message is then stored on beforehand in the first memory. Because the message has a cognate character, there is a larger chance that it will have a positive influence on the driver causing the latter either to adapt his driving behaviour, or not to drive the vehicle himself. The device according to the invention thus offers the possibility to warn the driver for an irresponsible driving behaviour.

A first preferred embodiment of a device according to the invention is characterized in that a control unit comprises a code word recognizing element provided with a second memory for storing a first code word and with an input for receiving a second code word supplied by a user, which code word recognizing element is provided with comparison means for comparing the second code word with the first code word and for generating a second, resp. a third, control signal by correspondence, resp. non-correspondence, of the first code word with the second code word, which message generator is provided for reading message out of the first memory under joined control of the second control signal. The code word recognition element offers the possibility to the device to obtain some information relating to the actual condition of the driver. If the driver is able to present the correct code word then it may be reasonably assumed that he is not in a status of complete drunkenness. The message to be displayed can also be chosen in function of the comparison result.

Asecond preferred embodiment of a device according to the invention is characterized in that the message generator is provided for reading the second message from the first memory under control of a third control signal, and further comprising a first neutralization element provided for neutralizing the message generator after receipt of the third control signal and supply of the second message. When the driver is not able to present the correct code word, he will definitely not be able to drive the vehicle in a responsible manner. The second message can then also be chosen in function thereof.

It is favourable that the code word recognizing element is provided for generating first an error signal when non-correspondence between first and second code word is established and for generating the third control signal if within a predetermined time period the number of generated error signals exceeds a predetermined number. This enables to offer at least one new chance should the second code word be erroneously supplied.

A third preferred embodiment of a device according to the invention is characterized in that it comprises a second neutralizing element provided with an input for receiving the third control signal and further provided for neutralizing the drive means of the vehicle under control of a received third control signal. This enables to neutralize the vehicle if it appears that the driver is not able to present the correct code word.

It is favourable that the second memory is a read and a write memory. Due to this, it is possible to change sometimes the first code word by storing a new first code word. This offers a solution to the fact that the user could introduce the second word in an as they say "unconscious" manner.

A fourth preferred embodiment of a device according to the invention is characterized in that the control unit has an input for receipt of a speed value indicating the actual vehicle speed and which control unit is provided with comparison means for comparing the received speed value with a predetermined threshold value and by exceeding said threshold value generating a fourth control signal and supplying it to the message generator. Because high speed and liquor excess are often coupled with each other, this embodiment offers the possibility to remedy to this phenomenon.

To accentuate the surprising character of the message it is favourable that the time watching element be provided with modification means for modifying the time period of the intervals.

A fifth preferred embodiment of a device according to the invention is characterized in that the control unit is provided with selection means for selecting under control of a first control signal one of the stored messages. By storing several messages and by each time selecting another message a monotonous character is avoided.

The invention will now be described by means of the drawing showing an embodiment. In the drawing :
figure 1 shows a schematic view of an embodiment of a device according to the invention;
figure 2 shows a flow chart illustrating the operation of the device according to the invention.

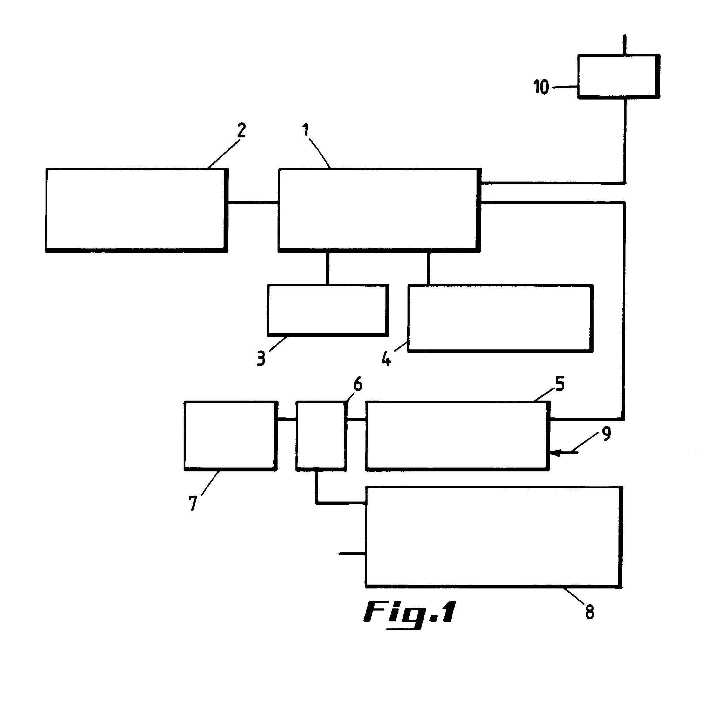

The embodiment shown in figure 1 of a device according to the invention comprises a control unit 1, for example formed by a microprocessor provided with a clock. A first input of the control unit is connected with an input unit 2 which is provided to receive input signals such as i.a. the actual time, a code word, the speed at which the vehicle moves as well as a signal indicating that the vehicle engine has been started and runs. A second input of the control unit 1 is connected with a keyboard 3 for presenting data and instructions to the control unit or to a memory coupled therewith. A display unit 4, for example formed by a LCD, is connected with a first output of the control unit.

A second output of the control unit is connected with a message generator 5 an output of which being connected via an interface 6 with a display unit 7. An input of the interface 6 is further connected to a control unit 8. An input 9 of the message generator 5 is provided for supplying one or more messages.

A third output of the control unit is connected with a module 10 connectable to the motor control of the vehicle, for example the ignition or the motor management system.

The message generator 5 comprises a first memory, for example formed by a EEPROM or a RAM, provided for storing at least one but preferably several messages formed by a warning message having a cognate character. The cognate character of the message is formed by having the message presented by a person which is closely related to the vehicle driver in whose vehicle the device is built in. So for example the message is presented by the partner, a parent or a close related to the driver. The message invites the driver to drive safely and to respect an appropriate driving behaviour. The cognate character with which the message is presented increases the preventive character of the message.

The message is preferably presented as a spoken message, but it is of course also possible to display visually the message either or not provided with sound. The information or the message is digitally stored in the first memory of the message generator 5. To that purpose the message is supplied via the input 9. Preferably the message generator comprises an analog-digital converter and a speech generator in order to present the message via a usual microphone. If the message generator is provided for displaying a visual image, it will be provided with a video generator and input 9 shall be provided for connecting a video-camera. The number of messages to be stored will of course be dependent of the dimension of the memory and the length of each message.

The interface 6 is provided with a digital-analog converter in order to convert the digitally stored message to an analog message that is suitable to be presented via the display unit 7. The display unit is for example formed by the car-radio and is as such not an independent component of the device according to the invention. If use is made of visual information, the display unit comprises for example an LCD, which, if the vehicle is equipped with an opto-electronic dashboard, can be formed by an LCD from that dashboard.

The control unit 8 is provided to determine the level of the driving and background noise and to adapt the signal amplifying of the message to be presented in function of the measured level. By displaying the message, if the car-radio is switched on, the signal of the latter will be overruled in order to enable the message to be produced.

In order to enable the operation of the device according to the invention it is necessary to supply a start and finish time to the time watching element which is part of the control unit 1. In such a way there is obtained that the device is only active during the period situated between the start and finish moment. Thereupon there is avoided that the messages be meaningless presented. As start resp. finish time could for example be chosen a Saturday evening 22.00 p.m. resp. a Sunday morning 7.00 a.m., because at these hours there is a large chance that the vehicle is used for outings. The start and finish time is supplied by a person entitled thereto, for example the proprietor or owner of the vehicle there the device is built in or by the one who is entitled to exert a certain authority on the driver. For presenting the start and finish time the operator will first supply the access code to the device according to which he informs the device that he is entitled to execute this operation. Supplying of the start and finish time is for example realized by means of the keyboard key 3.

The access code consists either of a fixed code or of a code which can be modified. With the latter alternative, the person entitled thereto has the possibility to change the access code from time to time. The latter has the advantage that, if the user could by accident know the access code, he could in such a manner neutralize the device, there could be intervened in an easy way and in this manner rending this neutralisation facility impossible.

The message to be supplied can be charged in the memory with each operation in order not to cause a certain uniformness. But it is also possible to use for a longer time a same message several times.

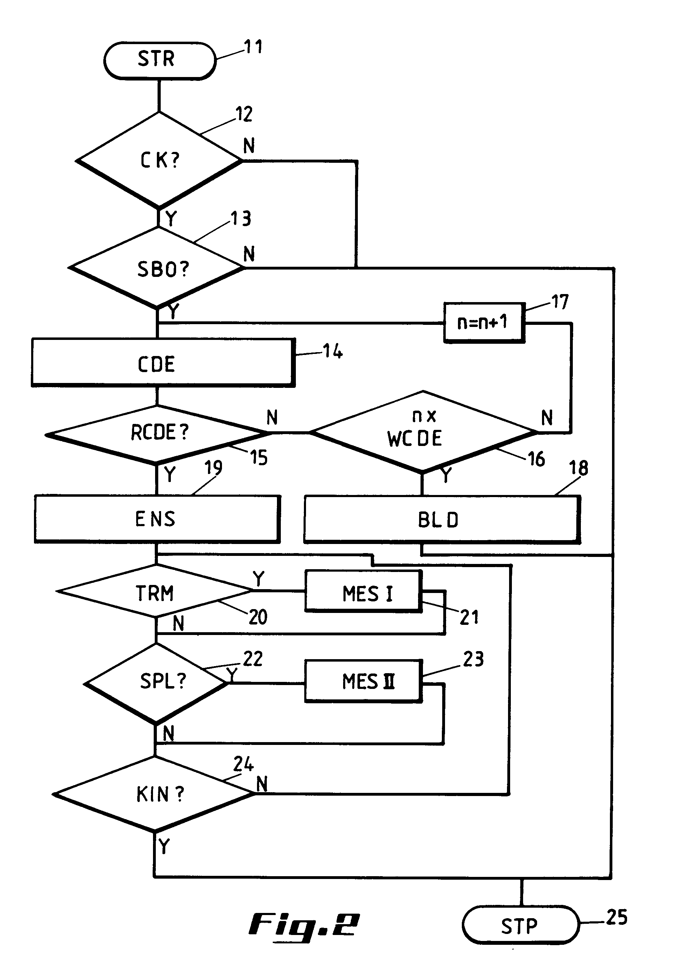

The operation of the device according to the invention will now be described by means of figure 2 showing a flow chart, which is executed under control of control unit 1.
11. STR : The treatment programm is started. This is for example realized by turning the contact key into the contact.
12. CK ? : The control unit verifies if the engine is started, for example by verifying if a corresponding signal comes from the contact.
13. SBO ? : The control unit verifies by means of the time watching element if the actual time is situated within the period situated within the start and finish time. To this purpose the time watching element records the actual time and compares it with the supplied start and finish time. On the basis of this comparison is determined if the actual time is situated in between the start en finish time period. The indication that the actual time is whether or not situated within said period is for example indicated by setting a flip-flop. When the actual time is not situated within said period, the program is stopped within said period, the program is stopped (STP 25) causing the device to be deactivated.
14. CDE : The start of the engine is temporarily neutralized if the actual time is situated within said time limit and the driver is asked to present a second code word to the device. This second code word is for example formed of a code comprising four, six or more digits and is presented by means of the keyboard 3.
15.RCDE ? : There is now verified by a code word recognition element which is part of the control unit if the presented second code word corresponds with a first code word stored in a second memory. This second memory is part of the code word recognition element. To this purpose, the code word recognition element compares the supplied second code word with the first. By correspondence (15 Y) a first control signal is generated. By non-correspondence (15 N) an error signal is generated.
16.n x WCDE?: There is verified if the error signal has already be generated n times, for example n a 3. This is for example realized by reading the actual status of a counter, which is reset to zero by starting (11 STR).
17. n=n+1 : The counter is incremented with one unit when the number of error signals is less then n (16, N). Thereafter the user is requested to present the second code word again (14, CDE).
18. BLD : If the error signal has been generated n times, a third control signal is generated. Under control of this third control signal, a message is read from the first memory and supplied to the display unit. This information comprises for example a message indicating that the vehicle remains neutralized for a predetermined time, for example three hours. The neutralization element 10 is then activated in order to neutralize for example the ignition of the vehicle. The message operator is preferably also neutralized after generating the third control signal even as the supply of the message in order not to stimulate a destruction due to aggression. The treatment of the program is thereafter finished.
19. ENS : When a first control signal has been generated (15 Y), the temporarily neutralization of the starting is cancelled and starting the vehicle is now possible.
20. TRM ? : There is verified if a predetermined time period has lapsed after starting the vehicle, for example one minute.
21. MES^{I} : A second control signal is generated and send towards the first memory of the message generator in order to read a first message from the memory and display it. The message is repeated regularly, preferably each ten minutes.
22 SPL ? : There is verified, for example by reading the speed indicator, if the vehicle circulates at a speed higher than a predetermined speed, determined by a threshold value stored in a memory.
23. MES": A fourth control signal is generated and send to the first memory of the message generator in order to read a third message from the memory and display it. Eventually there could be provided for, under control of the fourth control signal, increasing the repetition frequency of the first message, for example each five minutes.
24. KIN ? : There is verified if the key is still in the contact and if the engine still runs.
25. STP : This is the end of the control program.

If the vehicle is provided with a vehicle navigation system, then, preferably, the predetermined threshold of the speed value is adapted to the locally applied speed limit.

A second memory wherein the first code word is stored is preferably formed by a read and write memory such as for example a RAM or an EEPROM but it could of course also be formed by a ROM. The choice of a RAM or EEPROM has the advantage that in this manner the first code word can be loaded and if desired changed by a person entitled thereto who already known said access code. When indeed the user has often used the second code word, there is a possibility that he will automatically supply the correct code word. This would then weaken this check possibilities. By creating the possibility to modify the first code word, facilities created by routine handlings are highly reduced.

The intervals between messages could be either fixed or variable. Variable intervals present the advantage to break down the otherwise monotonous and expectable patterns. To enable those variable intervals, the time watching element is provided with modification means. These modification means are for example formed by the fourth signal that is supplied to a control input of the time watching element so as described under step 23 of the control program. The modification means could otherwise be formed by a random generator which each time after supplying a first message randomly generates a number, which number then indicates the time period which has to be lapsed before the subsequent message is transmitted. Further it is possible to vary the intervals under control of control signals derived from the accelerometers, steering wheel movements, break operation, etc. Further the person entitled to store the messages could also program the modifications means in such a manner that a sequence of intervals is preprogrammed.

Instead of at step 21 under control of the first control signal each time display the same message, it is also possible to generate as first message a series of each time different messages which are stored in the first memory. These messages are then read according to a sequence or randomly under control of subsequent first control signals. To this purpose the control unit comprises selection means for each time selecting one of the stored messages. The selection means comprise either a counter which is incremented with one unit each time after having received a first control signal and thus each time forms a subsequent memory address for addressing a subsequent message for said series. In the case of random addressing the selection means comprise a random generator.

## Claims

1. A device for warning the driver of a vehicle, said device comprising a control unit connected with a message generator provided with a first memory, said first memory being provided for storing at least a first message, characterized in that the control unit comprises a time watching element provided with an input for supplying a start and a finish moment, which time watching element is further provided for each time generating at intervals in a period situated between said start and finish moment a first control signal and supplying it to the message generator, said message generator being provided for reading and supplying under control of the first control signal the first message, formed by a warning message with a cognate character, stored in the first memory.

2. A device as claimed in claim 1, characterized in that the control unit comprises a code word recognizing element provided with a second memory for storing a first code word and with an input for receiving a second code word supplied by a user, which code word recognizing element is provided with comparison means for comparing the second code word with the first code word and for generating a second resp. a third control signal by correspondence resp. non-correspondence of the first code word with the second code word, which message generator is provided for reading the first message out of the first memory under joined control of the second control signal.

3. A device as claimed in claim 2, wherein the first memory is also provided for storing the second message, characterized in that the message generator is provided for reading the second message from the first memory under control of a third control signal, and further comprising a first neutralization element provided for neutralizing the message generator after receipt of the third control signal and supply of the second message.

4. A device as claimed in claim 2 or 3, characterized in that the code word recognizing element is provided for generating first an error signal when non-correspondence between first and second code word is established and for generating the third control signal if within a predetermined time period the number of generated error signals exceeds a predetermined number.

5. A device as claimed in any one of the claims 2-4, characterized in that it comprises a second neutralizing element provided with an input for receiving the third control signal and further provided for neutralizing the drive means of the vehicle under control of a received third control signal.

6. A device as claimed in any one of the claims 2-5, characterized in that the second memory is a read and write memory.

7. A device as claimed in any one of the claims 1-6, characterized in that the control unit has an input for receipt of a speed value indicating the actual vehicle speed and which control unit is provided with comparison means for comparing the received speed value with a predetermined threshold value and by exceeding said threshold value generating a fourth control signal and supplying it to the message generator.

8. A device as claimed in claim 7, characterized in that the message generator is provided for increasing the repetition frequency of the first message under control of the fourth control signal.

9. A device as claimed in claim 7, wherein the first memory is also provided for storing a third message, characterized in that the message generator is provided for reading from the first memory and supplying the third message under control of the fourth control signal.

10. A device as claimed in any one of the claims 1-9, characterized in that the time watching element is provided with modification means for modifying the time period of the intervals.

11. A device as claimed in claim 10, characterized in that said modification means comprises a control input applied on the time watching element for receipt of a time signal indicating the time period of the intervals.

12. A device as claimed in claims 7 and 11, characterized in that the control unit is provided for generating, after having generated the fourth control signal, a time signal with a predetermined time period and supplying the latter to the time watching element.

13. A device as claimed in any one of the claims 1 to 12, wherein said first memory is provided for storing a multiple of messages, characterized in that the control unit is provided with selection means for selecting under control of a first control signal one of the stored messages.

14. A device as claimed in claim 13, characterized in that said selection means are provided with a random generator.

15. A vehicle provided with a device as claimed in any one of the claims 1 to 14.
